# EUROPÄISCHE PATENTANMELDUNG

(11) **EP 2 942 500 A1**
(43) Veröffentlichungstag der Anmeldung: **11.11.2015**
(21) Anmeldenummer: 15163686.7
(22) Anmeldetag: 15.04.2015
(51) Int. Cl.: F01N 3/04, F02D 9/04, F02D 9/10, F16K 1/22, F16K 11/052, F28F 27/02

(54) **ABGASWÄRMETAUSCHER MIT BYPASSROHR**

(30) Priorität: 07.05.2014 DE 102014106386
(71) Anmelder: Benteler Automobiltechnik GmbH, 33102 Paderborn (DE)
(72) Erfinder: Fot, Viktor, 34439 Willebadessen (DE)
(74) Vertreter: Griepenstroh, Jörg

(57) **Zusammenfassung**

Die vorliegende Erfindung betrifft einen Abgaswärmetauscher (1) für ein Kraftfahrzeug, aufweisend einen umlaufenden Wärmetauscherkanal (3) mit innenliegendem Bypassrohr (2), wobei eine Stellklappe (6) vorgesehen ist um einen Abgasstrom durch den Wärmetauscherkanal (3) oder den Bypasskanal zu leiten, welcher dadurch gekennzeichnet ist, dass die Stellklappe (6) eine Öffnung (8) mit einem stutzenförmigen Abschnitt (9) aufweist, wobei in einer Bypassstellung der stutzenförmige Abschnitt (9) mit einer Eintrittsöffnung (5) des Bypassrohrs (2) in strömungsdurchleitendem Kontakt steht und die Stellklappe (6) von einer Bypasstellung in eine Übertragungsstellung drehbar ist in welcher der Eintritt (10) verschlossen ist.

## Beschreibung

Die vorliegende Erfindung betrifft einen Abgaswärmetauscher für ein Kraftfahrzeug gemäß den Merkmalen im Oberbegriff von Patentanspruch 1.

In Kraftfahrzeugen werden Verbrennungskraftmaschinen eingesetzt, um die im Kraftstoff enthaltene chemische Energie durch den Verbrennungsprozess in mechanische Energie zu wandeln. Der Wirkungsgrad ist dabei auf ca. 40% begrenzt. Dies bedeutet, dass von der im Kraftstoff enthaltenen chemischen Energie 40% in mechanische Energie umsetzbar ist, für den verbleibenden Anteil der Energie wird Wärme produziert, welche dann mit dem Abgasstrom abgeführt wird oder aber in Form von Wärme über den Motorblock oder sonstige Peripheriekomponenten entsprechend an die Umgebung abgegeben wird.

Für verschiedene Anwendungsfälle ist es vorteilhaft, wenn die im Abgas enthaltene Wärmeenergie genutzt wird. Hierzu sind Abgaswärmetauscher bekannt, durch die einerseits der Abgasstrom zum Entziehen von Wärme geleitet wird und ein zweiter Kanal vorhanden ist, der über ein entsprechendes Medium dann die entzogene Wärme einer weiteren Verwendung zuführt. Dies kann beispielsweise die Beheizung eines Fahrgastinnenraums sein, die Beheizung von anderen Motorkomponenten oder aber auch die Zuführung der Wärme zu einem wärmeabhängigen Kreisprozess ermöglicht wird.

Bei Start einer Verbrennungskraftmaschine ist diese jedoch zunächst auf Umgebungstemperatur, welche je nach Einsatzgebiet sowie klimatischen Bedingungen in der Regel zwischen -20°C bis +40°C betragen kann. Die Verbrennungskraftmaschine befindet sich dann in der Kaltstartphase, wobei hier die Betriebsflüssigkeiten, beispielsweise Kühlwasser oder aber auch Medien wie z. B. das Motoröl ebenfalls in einem kalten und damit geringer fließfähigem Zustand sind. Ziel ist es nunmehr schnellstmöglich auf die optimale Betriebstemperatur der Verbrennungsmaschine selber sowie aller Peripheriekomponenten zu gelangen.

Insbesondere im Bereich des Abgasstranges sind Abgasnachbehandlungskomponenten angeordnet und in ihrem Wirkungsgrad für die optimale Betriebstemperatur entsprechend ausgelegt. Bei einem Abgaswärmetauscher ist somit zumeist ein Bypass vorgesehen, so dass beispielsweise zunächst der Abgasstrom vollständig durch den Bypass geführt wird und entsprechend die Abgasnachbehandlungskomponenten schneller aufheizt, wobei im späteren Betrieb dann entsprechend der Abgaswärmetauscher in eine Übertragungsstellung derart gebracht wird, dass dem Abgasstrom Wärme entzogen wird.

Ein solcher Abgaswärmetauscher ist beispielsweise aus der EP 1 455 079 B1 bekannt. Damit nunmehr der Abgasstrom nicht durch den Übertragungskanal, sondern durch den Bypasskanal geleitet wird oder umgekehrt, ist ein Stellelement, hier in Form eines Kugelkörpers bekannt, der durch Ausführung einer Drehbewegung entsprechend den Abgasstrom durch den Bypasskanal oder aber den Übertragungskanal lenkt.

Ferner ist aus der DE 21 26 846 A ein Ableitventil für Kipperfahrzeuge mit beheizten Kippaufbauten bekannt, bei dem eine Stellklappe verwendet wird, um einen Abgasstrom umzuschalten.

Ferner sind diverse Klappenanordnungen aus dem Stand der Technik bekannt.

Problematisch dabei ist, dass Temperaturen, insbesondere bei Otto-Motoren in Höhe von bis zu mehr als 1000°C im direkten Abgasstrom auftreten, was zu nicht unerheblichen Wärmeausdehnungen und thermische Belastung führt sowie dass das Abgas hoch korrosive Eigenschaften aufweist, denen Abgaskomponenten im direkten Abgasstrom ausgesetzt sind.

Aufgabe der vorliegenden Erfindung ist es daher ein Stellelement in einem Abgaswärmetauscher zur Ansteuerung unterschiedlicher Kanäle aufzuzeigen, welches einen konstruktiv einfachen Aufbau besitzt, kostengünstig herstellbar ist und gegenüber unterschiedlichen Wärmeausdehnungen unempfindlich ausgebildet ist.

Die zuvor genannte Aufgabe wird erfindungsgemäß mit einem Abgaswärmetauscher gemäß den Merkmalen im Patentanspruch 1 gelöst.

Vorteilhafte Ausgestaltungsvarianten der vorliegenden Erfindung sind Gegenstand der abhängigen Patentansprüche.

Der erfindungsgemäße Abgaswärmetauscher für ein Kraftfahrzeug weist einen Wärmetauscherkanal mit innenliegendem Bypassrohr auf, wobei eine Stellklappe vorgesehen ist, um einen Abgasstrom durch den Wärmetauscherkanal oder den Bypasskanal zu leiten. Erfindungsgemäß ist der Abgaswärmetauscher dadurch gekennzeichnet, dass die Stellklappe eine Öffnung mit einem stutzenförmigen Abschnitt aufweist, wobei in einer Bypassstellung der stutzenförmige Abschnitt mit einem Eintritt des Bypassrohres in strömungsdurchleitendem Kontakt steht und die Stellklappe von einer Bypassstellung in eine Übertragungsstellung schwenkbar ist, in welcher der Eintritt des Bypassrohres verschlossen ist.

Der Abgaswärmetauscher ist insbesondere als Wärmetauscher ausgebildet, welcher mittig in Längsrichtung erstreckend ein Bypassrohr aufweist, so dass das von einem Abgasrohr kommende Abgas direkt durch das Bypassrohr leitbar ist. Um das Bypassrohr herum befindet sich dann ein Durchströmkanal in Form eines Übertragungskanals. Wird das Abgas nicht durch das Bypassrohr, sondern durch den Übertragungskanal geleitet, ist in dem Übertragungskanal selbst noch ein entsprechender weiterer Kanal ausgebildet, um dann dem Abgas durch ein weiteres Medium Wärme zu entziehen. Beispielsweise kann dieser weitere Kanal in Form einer Spirale um das Bypassrohr gewunden sein, so dass dann die einzelnen Leitungen der Spirale von dem Abgas im Übertragungskanal im Kreuzstrom überströmt werden.

Um nunmehr wahlweise zwischen einer Bypassstellung oder aber einer Übertragungsstellung zu wählen, ist eine erfindungsgemäße Stellklappe vorgesehen, die insbesondere als einstückig und werkstoffeinheitliches Gußbauteil ausgebildet ist. Die Stellklappe kann zum einen derart betrieben werden, dass ausschließlich die Übertragungsstellung oder aber die Bypassstellung eingenommen wird. Im Rahmen der Erfindung wäre es auch vorstellbar, dass eine entsprechende Zwischenstellung eingenommen wird, um teilweise Abgas durch den Übertragungskanal zu leiten und den verbleibenden Teil durch den entsprechenden Bypass zu leiten. Die Stellklappe kann durch eine Drehbewegung um eine Drehachse innerhalb eines Eintrittsbereiches bzw. Eingangsbereiches des Abgaswärmetauschers von der Übertragungsstellung in die Bypassstellung verbracht werden. Die Klappe ist insbesondere scheibenförmig ausgebildet, wobei ein umlaufender Scheibenköper eine Öffnung, insbesondere im Wesentlichen mittig angeordnet aufweist. In der Bypassstellung verschließt somit der Scheibenkörper dem Abgas den Weg durch den Übertragungskanal und durch die Öffnung kann das Abgas direkt in das Bypassrohr einströmen.

Bevorzugt ist nunmehr die Stellklappe um eine Drehachse drehbar gelagert, wobei die Drehachse insbesondere im Bereich der Öffnung liegt und die Öffnung selbst durchbrochen ist. Wird nunmehr die Stellklappe um die Drehachse gedreht, so wird der umlaufende Scheibenkörper von einer Stellung orthogonal in Abgasströmungsrichtung liegend gedreht, so dass der Abgasstrom durch den Übertragungskanal verlaufen kann.

Damit nunmehr der Scheibenkörper über das Bypassrohr bzw. den Eintrittsbereich des Bypassrohres schwenkbar ist und es hier nicht zu einem Verkanten bzw. formschlüssigen Anlagenkontakt kommt, ist weiterhin in dem umlaufenden Scheibenkörper eine Wölbung in Form einer Haube ausgebildet. Die Haube des umlaufenden Scheibenkörpers übergreift dann in der Übertragungsstellung das Bypassrohr, wobei die Haube im Wesentlichen der äußeren Kontur des Bypassrohres entspricht und in der Übertragungsstellung formschlüssig auf einer Außenmantelfläche des Eintrittsbereiches des Bypassrohres zur Anlage kommt.

Damit nunmehr das Bypassrohr in der Übertragungsstellung ebenfalls verschlossen ist, ist weiterhin eine Dichtplatte in der Stellklappe ausgebildet, wobei in der Übertragungsstellung die Dichtplatte an dem Eintritt des Bypassrohres formschlüssig zur Anlage kommt und diesen abdichtet. Bevorzugt ist dabei die Dichtplatte gleichsam an der Außenfläche des stutzenförmigen Abschnittes ausgebildet, so dass hier eine Bauraumoptimierung bezüglich kompakter Abmaße der Stellklappe bei Ausführen der Drehbewegung um die Drehachse erfolgt.

Damit nunmehr nicht nur ein formschlüssiger Anlagenkontakt sondern auch eine dichtende Funktion bereitgestellt wird, ist weiterhin der Eintritt des Bypassrohres nach außen hin, insbesondere auf dessen Radialrichtung bezogen aufgeweitet bzw. aufgetulpt. An einer Innenmantelfläche der Aufweitung kommen dann entsprechende Dichtelemente, Dichtkörper oder aber Dichtwulste sowohl in der Übertragungsstellung der Dichtplatte oder aber in der Bypassstellung des stutzenförmigen Abschnittes zur Anlage. Die Dichtelemente und/oder Dichtkörper und/oder Dichtwulste sind bevorzugt an der Stellklappe ausgebildet.

Damit nunmehr die Drehbewegung innerhalb eines Eintrittsbereiches des Abgaswärmetauchers ausgeführt werden kann, insbesondere unter Berücksichtigung der Haube ist an einem äußeren Gehäuse des Abgaswärmetauschers eine Ausbauchung vorhanden. Die Ausbauchung ist insbesondere auf die Radialrichtung nach außen hin gerichtet. Die Stellklappe und insbesondere die Haube ist dadurch auf einer Innenseite der Ausbauchung vorbeischwenkbar ohne hier in formschlüssigen Anlagenkontakt zu gelangen. In der Bypassstellung kommt eine nach außen umlaufende Kante des Scheibenkörpers mit einer Innenmantelfläche des Gehäuses dichtend zur Anlage. Insbesondere erstreckt sich die außen umlaufende Kante dann auch im Bereich der Haube und kommt auch hier mit der Innenmantelfläche des Gehäuses dichtend zur Anlage.

Weitere Vorteile, Merkmale, Eigenschaften und Aspekte der vorliegenden Erfindung werden in der nachfolgenden Beschreibung aufgeführt. Bevorzugte Ausführungsvarianten werden in den schematischen Figuren dargestellt. Diese dienen dem einfachen Verständnis der Erfindung. Es zeigen:
- Figur 1 bis 4: eine erste Ausführungsvariante der erfindungsgemäßen Abgaswärmetauscher mit Bypassklappe in verschiedenen Ansichten und
- Figur 5 bis 8: eine zweite Ausführungsvariante des erfindungsgemäßen Wärmetauschers in verschiedenen Ansichten.

In den Figuren werden für gleiche oder ähnliche Bauteile dieselben Bezugszeichen verwendet, auch wenn eine wiederholte Beschreibung aus Vereinfachungsgründen entfällt.

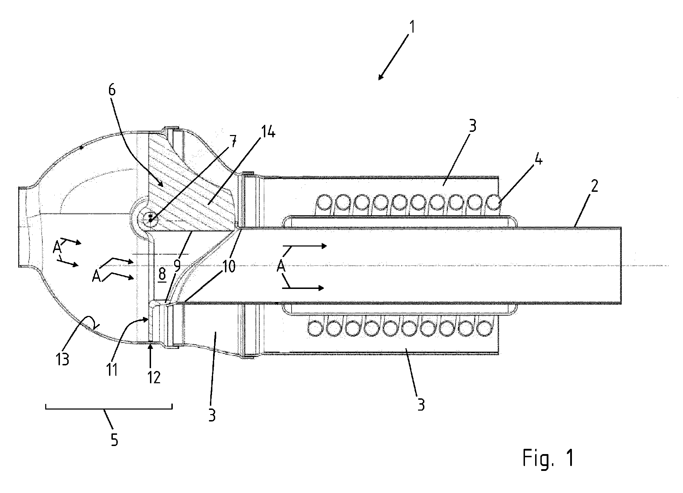

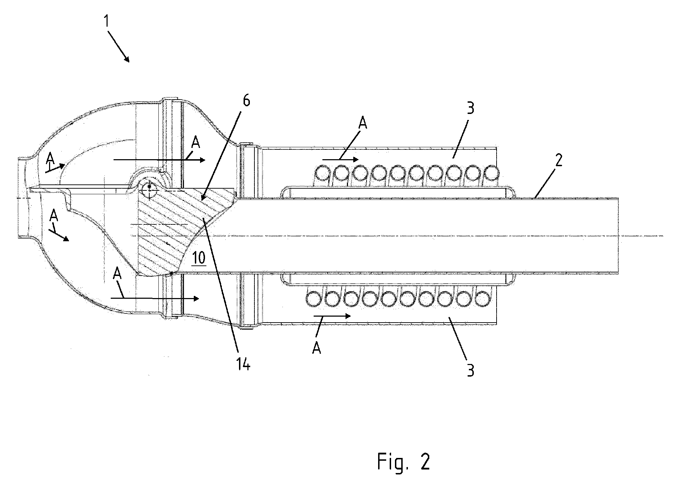

Figur 1 zeigt einen erfindungsgemäßen Abgaswärmetauscher 1, aufweisend ein innenliegendes Bypassrohr 2 und ein das Bypassrohr 2 außen umgreifenden Wärmetauscherkanal 3. In dem Wärmetauscherkanal 3 ist um das Bypassrohr 2 gewickelt ein Spiralrohr 4 angeordnet, durch dann ein nicht näher dargestelltes Medium leitbar ist und gemäß Figur 2 dem durch den Wärmetauscherkanal 3 strömendes Abgas A Wärme entzieht. Gemäß Figur 1 strömt jedoch das Abgas A vollständig durch das Bypassrohr 2, da in einem Eintrittsbereich 5 des Abgaswärmetauschers 1 eine Stellklappe 6 drehbar um eine Drehachse 7 angeordnet ist. Die Stellklappe 6 weist eine Öffnung 8 auf, wobei sich von der Öffnung 8 aus ein stutzenförmiger Abschnitt 9 aus erstreckt, welcher mit einem Eintritt 10 des Bypassrohres 2 formschlüssig zur Anlage kommt. Der Eintritt 10 des Bypassrohres 2 ist dabei nach außen hin bezogen auf seine Radialrichtung aufgeweitet. Der Eintritt 10 ist ferner in Axialrichtung des Bypassrohres 2 abgeschrägt verlaufend um eine Drehbewegung der Stellklappe 6 zu ermöglichen. Die Stellklappe 6 befindet sich gemäß Figur 1 in der Bypassstellung, so dass das Abgas A kommend von einem nicht näher dargestellten Abgasstrang durch die Stellklappe 6 am Eintritt 10 in den Wärmetauscherkanal 2 gehindert ist und ausschließlich durch das Bypassrohr 2 strömt. Dies geschieht dadurch, dass die Stellklappe 6 einen außen umlaufenden Scheibenkörper 11 aufweist, wobei eine umlaufende Kante 12 des Scheibenkörpers 11 an einer Innenseite 13 des Eintrittsbereichs 5 formschlüssig dichtend zur Anlage kommt. Auf einer Außenseite des stutzenförmigen Abschnittes 9 ist eine Haube 14 ausgebildet. Die Haube 14 ist gemäß dieser Ausführungsvariante massiv ausgebildet.

Gemäß Figur 2 ist die Stellklappe 6 in Übertragungsstellung gebracht, so dass das Abgas A durch den Wärmetauscherkanal 3 strömt. Durch die Haube 14 selbst ist der Eintritt 10 des Bypassrohres 2 geschlossen, so dass hier wiederum kein Abgas durch das Bypassrohr 2 strömen kann. Die Haube 14 kommt dabei an dem nach außen aufgeweiteten Eintritt 10 des Bypassrohres 2 formschlüssig und dichtend zur Anlage.

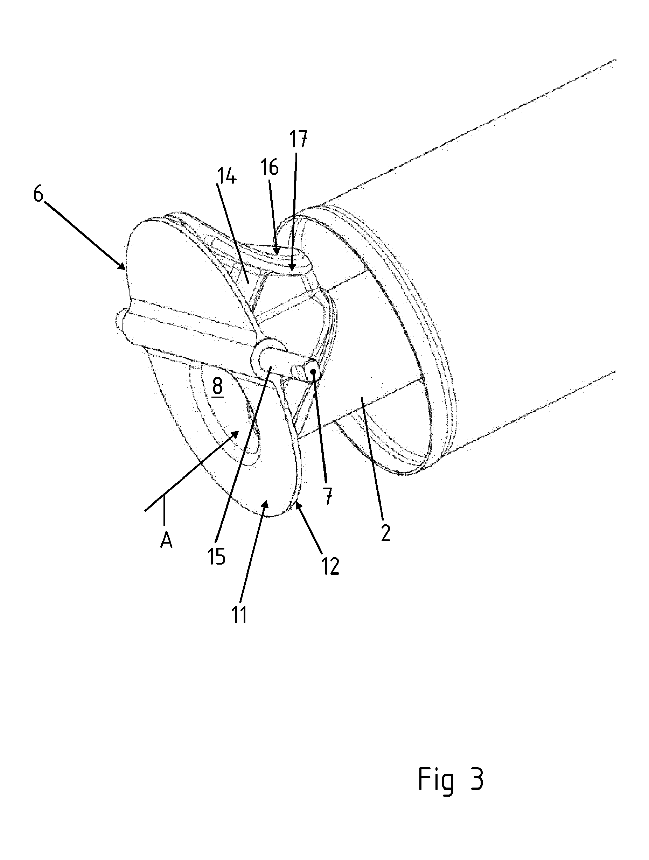

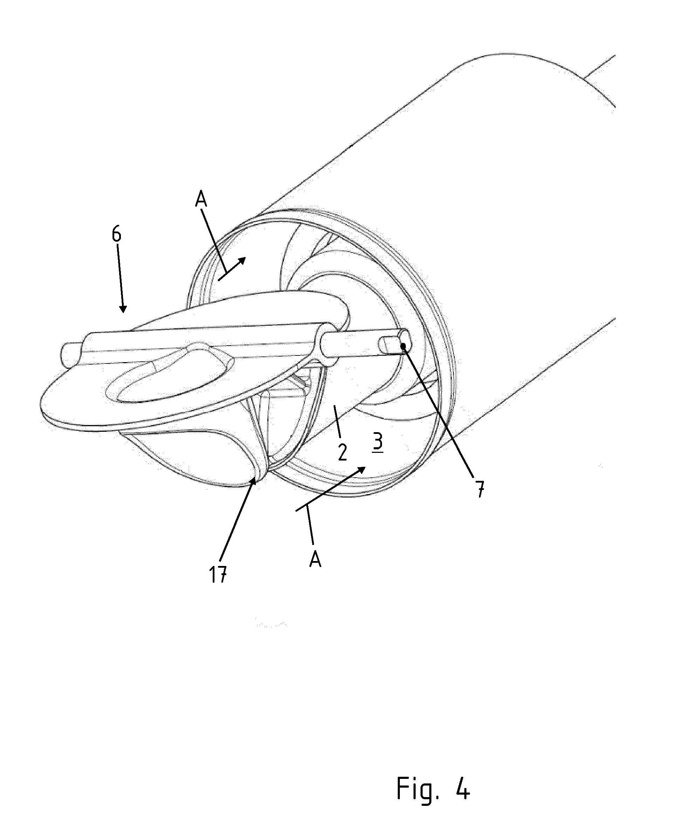

Figur 3 und 4 zeigen eine jeweils perspektivische Ansicht des erfindungsgemäßen Abgaswärmetauschers 1 ohne das Gehäuse im Eintrittsbereich. In Figur 3 ist dabei die Bypassklappe in Bypassstellung, so dass das Abgas A direkt in das Bypassrohr 2 strömen kann. Gut ersichtlich ist hier der umlaufende Scheibenkörper 11 sowie eine entsprechende außenseitige Lagerung der Drehachse 7. Hier ist ein Steckbolzen 15 dargestellt, um den die Stellklappe 6 drehbar ausgebildet ist. Die Öffnung 8 selbst ist dabei von der Drehachse 7 bzw. dem Steckbolzen 15 nur teilweise angeschnitten.

Gemäß Figur 4 ist die Stellklappe 6 dann um die Drehachse 7 gedreht, so dass diese sich in Übertragungsstellung befindet. Abgas A kann somit in den Wärmetauscherkanal 3 einströmen, wobei das Bypassrohr 2 durch eine im Bereich der Haube 14 angeordnete Dichtplatte 16 geschlossen ist. Bevorzugt ist an der Öffnung 8 aber auch an der Dichtplatte 16 eine jeweils umlaufende Dichtwulst 17 ausgebildet. Die Dichtwulst 17 kommt besonders bevorzugt formschlüssig an dem aufgeweiteten Eintritt 10 des Bypassrohres 2 in der jeweiligen Bypassstellung oder aber Übertragungsstellung zur Anlage.

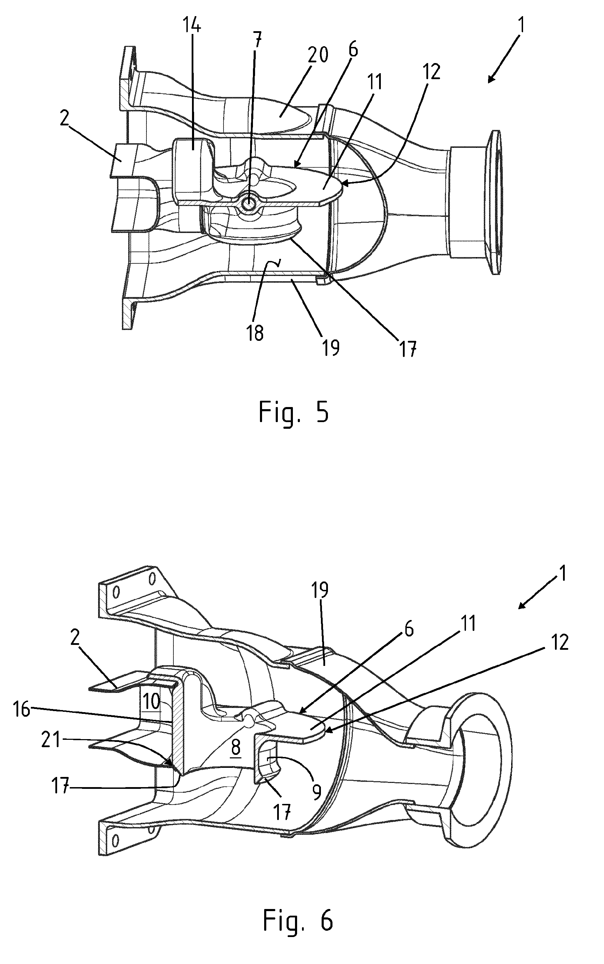

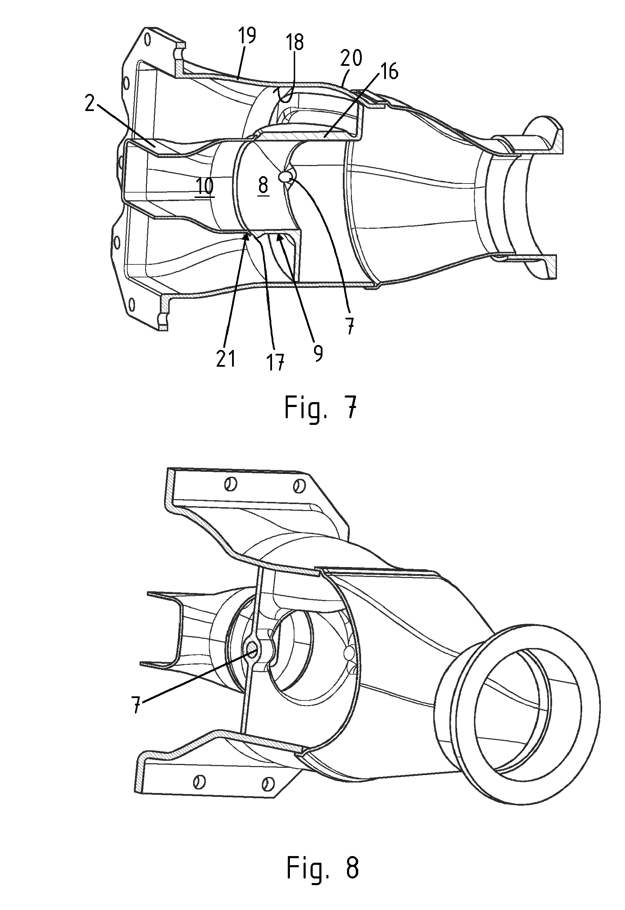

In den Figuren 5 bis 8 ist eine weitere Ausgestaltungsvariante des erfindungsgemäßen Abgaswärmetauschers 1 dargestellt. Figur 5 und 6 zeigen dabei den Abgaswärmetauscher 1 in der Übertragungsstellung mit geöffneter Stellklappe 6. Die Stellklappe 6 weist dazu einen außen umlaufenden Scheibenkörper 11 auf, der wiederum mit seiner außen umlaufenden Kante 12 dichtend an einer Innenmantelfläche 18 des Gehäuses 19 in der Bypassstellung gemäß der Figur 7 dargestellt dichtend zur Anlage kommt. Weiterhin gut ersichtlich in Figur 5 ist eine Ausbauchung 20 an dem äußeren Gehäuse 19, in der bei Ausführung einer Drehbewegung um die Drehachse 7 die hier dargestellte Haube 14 ohne Anlagenkontakt mit der Innenmantelfläche 18 durchschwenkbar ist und dann in der Bypassstellung gemäß Figur 7 innerhalb der Innenmantelfläche 18 an der Ausbauchung 20 formschlüssig dichtend zur Anlage kommt. Die Haube 14 ist dabei nach Art einer Hutze ausgebildet.

Ferner dargestellt ist die Dichtplatte 16 an der Außenseite des stutzenförmigen Abschnittes 9 der Öffnung 8. Umlaufend an der Dichtplatte 16 ist eine Dichtwulst 17 ausgebildet, genauso wie umlaufend an der Öffnung 8. Der jeweilige Dichtwulst 17 der Dichtplatte 16 kommt in der Figur 5 und 6 dargestellten Übertragungsstellung formschlüssig an einer Aufweitung 21 des Eintritts 10 des Bypassrohres 2 zur Anlage, wohingegen der Dichtwulst 17 des stutzenförmigen Abschnittes 9 gemäß Figur 7 und 8 formschlüssig an der Aufweitung 21 des Eintritts 10 des Bypassrohres 2 zur Anlage kommt. Ebenfalls gut ersichtlich ist, dass in der hier dargestellten Ausgestaltungsvariante die Drehachse 7 in der Öffnung 8 liegt. Hierdurch wird ein sehr kompaktes Abmaß aufgrund der ausführbaren Drehbewegung der Stellklappe 6 erreicht.

### Bezugszeichen:

- 1 -: Abgaswärmetauscher
- 2 -: Bypassrohr
- 3 -: Wärmetauscherkanal
- 4 -: Spiralrohr
- 5 -: Eintrittsbereich zu 1
- 6 -: Stellklappe
- 7 -: Drehachse
- 8 -: Öffnung zu 6
- 9 -: stutzenförmiger Abschnitt
- 10 -: Eintritt zu 2
- 11 -: Scheibenkörper
- 12 -: Kante
- 13 -: Innenseite zu 5
- 14 -: Haube
- 15 -: Steckbolzen
- 16 -: Dichtplatte
- 17 -: Dichtwulst
- 18 -: Innenmantelfläche zu 19
- 19 -: Gehäuse
- 20 -: Ausbauchung zu 19
- 21 -: Aufweitung

- A -: Abgas

## Patentansprüche

1. Abgaswärmetauscher (1) für ein Kraftfahrzeug, aufweisend einen umlaufenden Wärmetauscherkanal (3) mit innenliegendem Bypassrohr (2), wobei eine Stellklappe (6) vorgesehen ist um einen Abgasstrom durch den Wärmetauscherkanal (3) oder den Bypasskanal zu leiten, **dadurch gekennzeichnet, dass** die Stellklappe (6) eine Öffnung (8) mit einem stutzenförmigen Abschnitt (9) aufweist, wobei in einer Bypassstellung der stutzenförmige Abschnitt (9) mit einem Eintritt (10) des Bypassrohrs (2) in strömungsdurchleitendem Kontakt steht und die Stellklappe (6) von einer Bypasstellung in eine Übertragungsstellung drehbar ist in welcher der Eintritt (10) verschlossen ist.

2. Abgaswärmetauscher nach Anspruch 1, **dadurch gekennzeichnet, dass** die Stellklappe (6) einen außen umlaufenden Scheibenkörper (11) aufweist, wobei der Scheibenkörper (11) in der Bypassstellung einen Wärmetauschereintritt des Wärmetauscherkanals (3) verschließt.

3. Abgaswärmetauscher nach Anspruch 2, **dadurch gekennzeichnet, dass** an einer Außenseite des stutzenförmigen Abschnittes (9) und in dem Scheibenkörper (11) eine Haube (14) ausgebildet ist, wobei die Haube (14) in der Wärmetauscherstellung das Bypassrohr (2) zumindest abschnittsweise übergreift.

4. Abgaswärmetauscher nach einem der Ansprüche 1 bis 3, **dadurch gekennzeichnet, dass** an der Außenfläche des stutzenförmigen Abschnittes (9) eine Dichtplatte (16) ausgebildet ist, welche in der Übertragungsstellung den Eintritt (10) des Bypassrohres (2) abdichtet.

5. Abgaswärmetauscher nach einem der Ansprüche 1 bis 4, **dadurch gekennzeichnet, dass** das Bypassrohr (2) am Eintritt (10) aufgeweitet ist, wobei der stutzenförmige Abschnitt (9) oder die Dichtplatte (16) mit einem umlaufenden Dichtwulst (17) an einer Innenmantelfläche der Aufweitung (21) dichtend zur Anlage kommen.

6. Abgaswärmetauscher nach einem der Ansprüche 1 bis 5, **dadurch gekennzeichnet, dass** die Stellklappe (6) um eine Drehachse (7) drehbar gelagert ist, wobei die Drehachse (7) die Öffnung (8) durchgreift.

7. Abgaswärmetauscher nach einem der Ansprüche 1 bis 6, **dadurch gekennzeichnet, dass** an einem äußeren Gehäuse (19) eine Ausbauchung (20) vorhanden ist, wobei die Haube (14) an einer Innenseite der Ausbauchung vorbeischwenkbar ist und in der Bypasstellung mit einer Innenmantelfläche (18) des Gehäuses (19) im Bereich der Ausbauchung (20) dichtend zur Anlage kommt.

8. Abgaswärmetauscher nach einem der vorhergehenden Ansprüche, **dadurch gekennzeichnet, dass** die Stellklappe (6) einstückig und werkstoffeinheitlich, insbesondere als Gußbauteil ausgebildet ist.
